(19)

**Europäisches Patentamt**
**European Patent Office**
**Office européen des brevets**

(11)  **EP 4 625 357 A1**

(12)  **EUROPEAN PATENT APPLICATION**

(43) Date of publication:
**01.10.2025  Bulletin 2025/40**

(21) Application number: **25166172.4**

(22) Date of filing: **25.03.2025**

(51) International Patent Classification (IPC):
**G06V 10/82** *(2022.01)*  **G06V 10/26** *(2022.01)*
**G06V 10/764** *(2022.01)*  **G06V 10/80** *(2022.01)*
**G06V 20/56** *(2022.01)*  **G06V 20/70** *(2022.01)*

(52) Cooperative Patent Classification (CPC):
**G06V 10/26; G06V 10/764; G06V 10/806;**
**G06V 10/82; G06V 20/56; G06V 20/70**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2024  CN 202410373734**

(71) Applicant: **BYD Company Limited**
**Shenzhen, Guangdong 518118 (CN)**

(72) Inventors:
• **YANG, Xiaohui**
**Shenzhen, 518118 (CN)**

• **YU, Meng**
**Shenzhen, 518118 (CN)**
• **CHAO, Zhongdi**
**Shenzhen, 518118 (CN)**
• **YANG, Zhen**
**Shenzhen, 518118 (CN)**
• **LI, Feng**
**Shenzhen, 518118 (CN)**

(74) Representative: **Mathys & Squire**
**The Shard**
**32 London Bridge Street**
**London SE1 9SG (GB)**

(54)  **METHOD FOR TRAINING MULTI-TASK NETWORK, AND RELATED DEVICE**

(57)  Embodiments of the present disclosure disclose a method for training a multi-task network, and a related device. The method includes: obtaining a data training set, the data training set including a plurality of images; performing feature extraction on the plurality of images in the data training set, to obtain a first feature and a second feature; determining a comprehensive feature based on the first feature and the second feature; determining a target-detection prediction result based on the second feature; determining a semantic-segmentation prediction result based on the comprehensive feature and the target-detection prediction result; and determining a multi-task loss function based on the target-detection prediction result and the semantic-segmentation prediction result, and optimizing training of the multi-task network based on the multi-task loss function. In the present disclosure, a function of multi-task information exchange can be implemented based on a training framework of the multi-task network, so that the multi-task network implements accurate recognition in a lack of data annotation.

Obtain a data training set, the data training set including multiple images — S310

Perform feature extraction on the multiple images in the data training set, to obtain a first feature and a second feature, the first feature including multiple feature vectors corresponding to the multiple images at different scales, and the second feature being multiple detection-related feature vectors obtained by performing feature extraction on the multiple feature vectors that are at the different scales — S320

Determine a comprehensive feature based on the first feature and the second feature, the comprehensive feature being used for representing a feature obtained by fusing the multiple feature vectors corresponding to the images at the different scales — S330

Determine a target-detection prediction result based on the second feature — S340

Determine a semantic-segmentation prediction result based on the comprehensive feature and the target-detection prediction result — S350

Determine a multi-task loss function based on the target-detection prediction result and the semantic-segmentation prediction result, and optimize training of the multi-task network based on the multi-task loss function — S360

FIG. 3

EP 4 625 357 A1

**Description**

<u>FIELD</u>

The present disclosure relates to the field of image processing technologies, and in particular, to a method for training a multi-task network, and a related device.

<u>BACKGROUND</u>

With the development of autonomous driving technologies, automatic recognition of a target object becomes a key to autonomous driving. Currently, automatic recognition is usually performed on the target object through target detection and semantic segmentation that are synchronously trained. Different objects and positions in an obtained image are detected and obtained through the target detection, to better recognize and track other vehicles, pedestrians, obstacles, and the like. The obtained image is divided into different semantic regions such as roads, buildings, pedestrians, and vehicles through the semantic segmentation, to better understand a scene. The target detection and the semantic segmentation are combined, so that capabilities of scene understanding, environment perception, and obstacle recognition can be provided for the autonomous driving, to help an autonomous driving system make a safe and reasonable decision.

A current multi-task network for the semantic segmentation and the target detection has a high requirement on training data. The training data cannot be used for training the multi-task network when there is a missing label in the data, easily resulting in data waste. As a result, when resources for annotating the data are limited, a requirement on data annotation is high, easily resulting in increased difficulty in training the multi-task network.

<u>SUMMARY</u>

Embodiments of the present disclosure provide a method for training a multi-task network, and a related device. A function of multi-task information exchange is implemented based on a training framework of the multi-task network, to flexibly adapt to cases of misalignment of subtask annotation classes and incomplete data annotation, and the training is performed by using existing data fully, so that the multi-task network implements accurate recognition when there is a lack of data annotation.

According to a first aspect, an embodiment of the present disclosure provides a method for training a multi-task network. The method includes:

obtaining a data training set, the data training set including multiple images;

performing feature extraction on the multiple images in the data training set, to obtain a first feature and a second feature, the first feature including multiple feature vectors corresponding to the multiple images at different scales, and the second feature being multiple detection-related feature vectors obtained by performing feature extraction on the multiple feature vectors that are at the different scales;

determining a comprehensive feature based on the first feature and the second feature, the comprehensive feature being used for representing a feature obtained by fusing the multiple feature vectors corresponding to the images at the different scales;

determining a target-detection prediction result based on the second feature;

determining a semantic-segmentation prediction result based on the comprehensive feature and the target-detection prediction result; and

determining a multi-task loss function based on the target-detection prediction result and the semantic-segmentation prediction result, and optimizing training of the multi-task network based on the multi-task loss function.

Optionally, obtaining the data training set may comprise: obtaining an initial image set, and determining an image-class distribution status through semantic-segmentation annotation and target-detection annotation for a first-class image in the initial image set, the image-class distribution status comprising classes and total quantities; determining an image class with a largest total quantity based on the image-class distribution status; duplicating an image of another image class based on a quantity ratio of a first total quantity corresponding to the image class with the largest total quantity to a second total quantity corresponding to the another image class, to cause the total quantity of the another image class to reach the first total quantity, wherein the duplicated image is a second-class image, and the first-class image and the second-class image form an extended image set; and performing balanced sampling of different image classes on the extended image set, to obtain the data training set.

Optionally, the plurality of feature vectors may comprise a first feature vector and a second feature vector, the plurality of detection-related feature vectors may comprise a first detection-related feature vector and a second detection-related feature vector, and determining the comprehensive feature based on the first feature and the second feature may comprise: mapping the first detection-related feature vector to a segmentation feature space, to generate a first interaction parameter and a second interaction parameter, the segmentation feature space being used for representing a set space including a plurality of segmentation-related feature vectors obtained by performing feature extraction on the plurality of feature vectors that are at the different scales; performing feature fusion based on the first interaction parameter, the second interaction parameter, and the first feature vector, to obtain a first comprehensive feature; fusing the first comprehensive feature and the second feature vector, to generate a new second feature vector; mapping the second detection-related feature vector to the segmentation feature space, to generate a third interaction parameter and a fourth interaction parameter; and performing feature fusion based on the third interaction parameter, the fourth interaction parameter, and the new second feature vector, to obtain a second comprehensive feature, and determining the second comprehensive feature as the comprehensive feature.

Optionally, the plurality of feature vectors may further comprise a third feature vector, the plurality of detection-related feature vectors may further comprise a third detection-related feature vector, and after the second comprehensive feature is obtained, the method may further comprise: fusing the second comprehensive feature and the third feature vector, to generate a new third feature vector; mapping the third detection-related feature vector to the segmentation feature space, to generate a fifth interaction parameter and a sixth interaction parameter; and performing feature fusion based on the fifth interaction parameter, the sixth interaction parameter, and the new third feature vector, to obtain a third comprehensive feature, and determining the third comprehensive feature as the comprehensive feature.

Optionally, performing feature fusion based on the first interaction parameter, the second interaction parameter, and the first feature vector, to obtain the first comprehensive feature may comprise: determining a new first feature vector based on a weight of the first interaction parameter and a weight of the first feature vector, the weight of the first interaction parameter and the weight of the first feature vector being respectively calculated based on different parts of the first interaction parameter and the first feature vector; performing feature extraction on the new first feature vector, to obtain a fourth feature vector; and determining a new fourth feature vector based on a weight of the second interaction parameter and a weight of the fourth feature vector, the weight of the second interaction parameter and the weight of the fourth feature vector being respectively calculated based on different parts of the second interaction parameter and the fourth feature vector, and the first comprehensive feature being determined based on the new fourth feature vector.

Optionally, determining the semantic-segmentation prediction result based on the comprehensive feature and the target-detection prediction result may comprise: determining a first semantic-segmentation prediction result based on the comprehensive feature; determining, from the target-detection prediction result, a second class that is the same as a first class in the first semantic-segmentation prediction result; performing dimensional alignment on the second class based on the first class, to cause a quantity of the second class to be the same as a quantity of the first class, to obtain a new target-detection prediction result; and determining a second semantic-segmentation prediction result based on the new target-detection prediction result and the first semantic-segmentation prediction result, and determining the second semantic-segmentation prediction result as the semantic-segmentation prediction result.

Optionally, the multi-task may comprise a plurality of subtasks, the plurality of subtasks may comprise target detection and semantic segmentation, and determining the multi-task loss function based on the target-detection prediction result and the semantic-segmentation prediction result may comprise: determining a target-detection loss value $L_1$ based on the target-detection prediction result, and determining a semantic-segmentation loss value $L_2$ based on the semantic-segmentation prediction result, a subtask loss value $L_i$ satisfying the following formula:

$$L_i = \begin{cases} 0, y_i \text{ is null} \\ f_{loss_i}(f^w(x), y_i), y_i \text{ is not null} \end{cases}$$

wherein $y_i$ is a subtask prediction result, $i$ = 1 or 2, $f^w(x)$ is a subtask prediction output probability, and $f_{loss_i}()$ is a loss-function calculation formula; and determining the multi-task loss function based on the subtask loss value $L_i$.

Optionally, determining the multi-task loss function based on the subtask loss value $L_i$ may comprise: respectively determining subtask weights $\delta_i$ based on uncertainty of the multi-task; and determining the multi-task loss function $-log\ p(y_1,y_2|f^w(x))$ by using a negative log-likelihood loss function based on the subtask loss value $L_i$ and the subtask weights $\delta_i$, the multi-task loss function being calculated based on the following formula:

$$-log\ p(y_1, y_2|f^w(x)) = \frac{1}{\delta_1}L_1 + log\ \delta_1 + \frac{1}{\delta_2}L_2 + log\ \delta_2$$

wherein $p$ represents probability distribution.

Optionally, the plurality of images may be images related to a vehicle.

According to a second aspect, an embodiment of the present disclosure provides an electronic device, including a processor and a memory that stores executable instructions. The memory stores one or more programs, and when the processor executes the executable instructions stored in the memory, the processor performs the method in the first aspect.

According to a third aspect, an embodiment of the present disclosure provides a computer-readable storage medium, storing a power data management program and including executable instructions. When a processor of an electronic device executes the executable instructions, the processor performs the method in the first aspect.

According to a fourth aspect, an embodiment of the present disclosure provides a computer program product. The computer program product includes a non-transitory computer-readable storage medium storing a computer program. The computer program is operable to cause a computer to perform some or all of the steps described in the first aspect of the embodiments of the present disclosure. The computer program product may be a software installation package.

When the embodiments of the present disclosure are implemented, the data training set is first obtained, the data training set including the multiple images; then feature extraction is performed on the multiple images in the data training set, to obtain the first feature and the second feature, the first feature including the multiple feature vectors corresponding to the multiple images at the different scales, and the second feature being the multiple detection-related feature vectors obtained by performing feature extraction on the multiple feature vectors that are at the different scales; then the comprehensive feature is determined based on the first feature and the second feature, the comprehensive feature being used for representing the feature obtained by fusing the multiple feature vectors corresponding to the images at the different scales; then the target-detection prediction result is determined based on the second feature; then the semantic-segmentation prediction result is determined based on the comprehensive feature and the target-detection prediction result; and finally the multi-task loss function is determined based on the target-detection prediction result and the semantic-segmentation prediction result, and the training of the multi-task network is optimized based on the multi-task loss function. In this way, the function of multi-task information exchange is implemented based on the training framework of the multi-task network, to flexibly adapt to the cases of misalignment of subtask annotation classes and incomplete data annotation, and training is performed by using the existing data fully, so that the multi-task network implements accurate recognition in a lack of data annotation.

## BRIEF DESCRIPTION OF THE DRAWINGS

To describe the technical solutions in embodiments of the present disclosure or the related art more clearly, the accompanying drawings required for describing the embodiments or the related art are briefly described below. It is clear that the accompanying drawings in the following descriptions are merely some embodiments of the present disclosure, and a person of ordinary skill in the art may further derive other drawings based on the accompanying drawings without creative efforts.

FIG. 1 is a diagram of a system architecture of an autonomous driving system according to an embodiment of the present disclosure;
FIG. 2 is a diagram of a system architecture of a network training system according to an embodiment of the present disclosure;
FIG. 3 is a schematic flowchart of a method for training a multi-task network according to an embodiment of the present disclosure;
FIG. 4 is a schematic flowchart of a method for obtaining a data training set according to an embodiment of the present disclosure;
FIG. 5 is a schematic diagram of a feature fusion method according to an embodiment of the present disclosure;
FIG. 6 is a schematic diagram of a partial label training method according to an embodiment of the present disclosure;
FIG. 7 is a block diagram of composition of functional units of a device for training a multi-task network according to an embodiment of the present disclosure;
FIG. 8 is a block diagram of composition of functional units of another device for training a multi-task network according to an embodiment of the present disclosure; and
FIG. 9 is a schematic diagram of a structure of an electronic device according to an embodiment of the present disclosure.

## DETAILED DESCRIPTION

To make a person skilled in the art better understand the solutions of the present disclosure, the technical solutions in the embodiments of the present disclosure are clearly and completely described below with reference to the accompanying drawings of the embodiments of the present disclosure. It is clear that the described embodiments are a part of the embodiments of the present disclosure, rather than all of the embodiments. Based on the embodiments of the present disclosure, all other embodiments obtained by a person of ordinary skill in the art without creative efforts shall fall within the protection scope of the present disclosure.

The terms "first", "second", and the like in the present disclosure, the claims, and the accompanying drawings of the present disclosure are intended to distinguish between different objects, instead of describing a particular sequence. In addition, the terms "including", "having", or any other variant thereof are intended to cover a non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

Reference in this specification to "an embodiment" means that a specified feature, structure, or characteristic described with reference to the embodiment may be included in at least one embodiment of the present disclosure. Appearances of the phrase in various locations in the present disclosure are not necessarily all referring to a same embodiment, nor are separate or alternative embodiments mutually exclusive of another embodiment. It is explicitly and implicitly understood by a person skilled in the art that the embodiments described in this specification may be combined with another embodiment.

A current multi-task network has a high requirement on training data, and the training data cannot be used for training the multi-task network when there is a missing label in the data, easily resulting in a data waste. In addition, there is a problem that class quantities and classes of subtask training data are unbalanced. In addition, loss magnitudes and convergence speeds between subtasks are different. In addition, a correlation between the subtasks are also uncertain. Therefore, how to optimize the multi-task network and how to assign training weights to two subtasks are still technical problems that need to be urgently resolved currently.

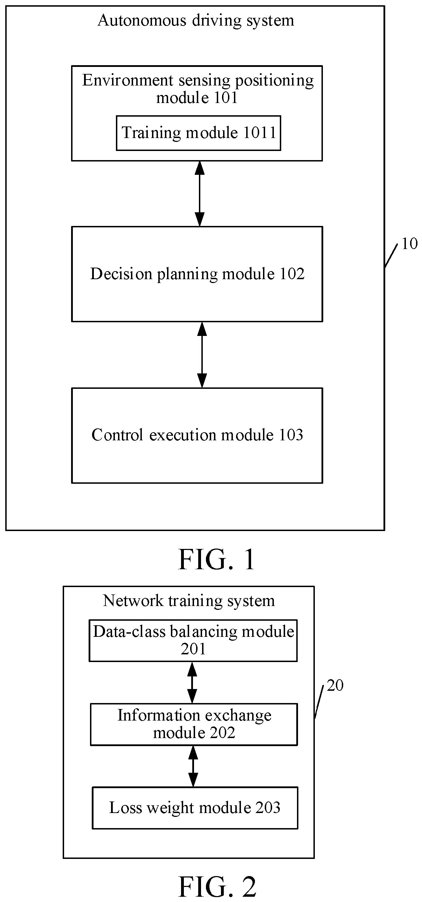

FIG. 1 is a diagram of a system architecture of an autonomous driving system according to an embodiment of the present disclosure. As shown in FIG. 1, an autonomous driving system 10 includes an environment sensing positioning module 101, a decision planning module 102, and a control execution module 103. The environment sensing positioning module 101 further includes a training module 1011. The environment sensing positioning module 101 is mainly for environment sensing and a positioning service, and mainly obtains an environmental indicator during traveling of a vehicle by using technologies such as a sensor technology, a camera, and GPS positioning, and collects data. The decision planning module 102 mainly determines and guides a next behavior of the vehicle based on the collected data. The control execution module 103 mainly controls related systems such as a throttle and a brake of the vehicle through a signal instruction based on a decision. The training module 1011 may include a network training system, and is mainly configured to optimize a multi-task network for target detection and semantic segmentation, so that a final prediction effect of the multi-task network is close to a true value of manual annotation, to better perceive an environment around the vehicle, and provide accurate guidance information for subsequent decision-making and execution of the autonomous driving system 10.

FIG. 2 is a diagram of a system architecture of a network training system according to an embodiment of the present disclosure. As shown in FIG. 2, a network training system 20 includes a data-class balancing module 201, an information exchange module 202, and a loss weight module 203. The network training system 20 is a main system in an architecture of an autonomous driving system, and guidance is provided for subsequent decision-making and control of autonomous driving by using a prediction result of a multi-task network in the network training system 20. The data-class balancing module 201 performs ratio duplication and class balanced sampling on image classes, to improve a generalization capability of a multi-task model for small-sample classes in task of target detection and semantic segmentation, thereby improving flexibility of the multi-task model. The information exchange module 202 performs complete interaction from a feature to an output, to implement a function of multi-task information exchange. The loss weight module 203 models for a conditional probability predicted and outputted by a network, and calculates uncertainty of each subtask, to dynamically assign a training weight to the subtask, so that a multi-task training process converges faster. The network training system 20 is used to flexibly adapt to cases of misalignment of subtask annotation classes and incomplete data annotation, and existing data is fully used to train the entire network, thereby causing the multi-task network to achieve better recognition performance in a lack of data annotation.

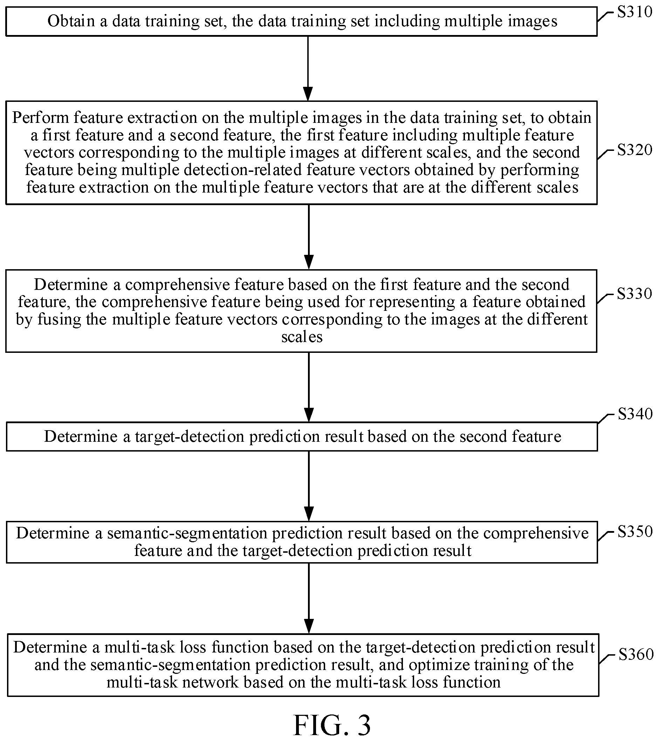

FIG. 3 is a schematic flowchart of a method for training a multi-task network according to an embodiment of the present disclosure. The method includes the following steps.

S310: Obtain a data training set, the data training set including multiple images.

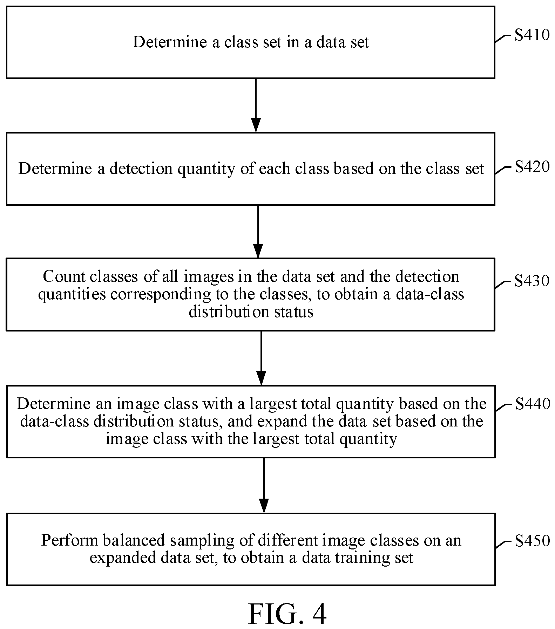

FIG. 4 is a schematic flowchart of a method for obtaining a data training set according to an embodiment of the present disclosure. The following steps are specifically included.

S410: Determine a class set in a data set.

For example, any picture P related to a vehicle in the existing data set may be first obtained, then all classes, for example, a motor vehicle, a non-motor vehicle, a pedestrian, and an animal, included in the picture P may be counted based on segmentation annotation, and the class set S is formed based on the classes.

S420: Determine a detection quantity of each class based on the class set.

For each class in the class set S, whether the class has a detection annotation is determined. If a class has a detection annotation, a quantity N of detection boxes of the class in the picture P is counted, to obtain a quantity of the class as N. If a class has no detection annotation, a quantity of the class is 1 by default. For example, the class may be the pedestrian, and a quantity of detection boxes of the pedestrian in the picture P is 3. In this case, it may be determined that there are three pedestrians in the picture P.

S430: Count classes of all images in the data set and the detection quantities corresponding to the classes, to obtain a data-class distribution status.

Steps of S410 and S420 are cycled, to count the quantities of the classes in all the pictures in the entire data set, and accumulation is performed to obtain the overall data-class distribution status of the data set under multi-task. The data-class distribution status may be: {class: total quantity}.

S440: Determine an image class with a largest total quantity based on the data-class distribution status, and expand the data set based on the image class with the largest total quantity.

A ratio of a total quantity of remaining classes in the data set to the total quantity of the class with the largest quantity is calculated based on the total quantity of the class with the largest quantity and based on the multi-task data-class distribution status obtained through counting, and a sample set of the other classes is expanded based on the ratio, to obtain an expanded data set. For example, the class with the largest counted quantity is the motor vehicle, a total quantity of motor vehicles is 90, and a total quantity of the class of the non-motor vehicle in the other classes is 20. In this case, 90 / 20 = 4.5. The quantity of the class of the non-motor vehicle may be expanded by 4.5 times, so that the total quantity of non-motor vehicles reaches 90, to expand the data set.

S450: Perform balanced sampling of different image classes on the expanded data set, to obtain a data training set.

During training, samples of a same quantity are sampled for all classes in the expanded data set. For example, 50 samples may be obtained for each of classes such as the motor vehicle, the non-motor vehicle, the pedestrian, and an obstacle.

It can be learned that counting is performed in combination based on the classes of semantic segmentation and the quantity of target detection, and the data set is expanded based on the ratio, thereby achieving balance of data classes under multi-task.

S320: Perform feature extraction on the multiple images in the data training set, to obtain a first feature and a second feature, the first feature including multiple feature vectors corresponding to the multiple images at different scales, and the second feature being multiple detection-related feature vectors obtained by performing feature extraction on the multiple feature vectors that are at the different scales.

Feature extraction performed on the image related to the vehicle in the data training set is global feature extraction for a multi-task feature. The multi-task may include target detection and semantic segmentation. The first feature belongs to a multi-task global shared feature. The image may have multiple scales. The multiple scales refer to signal sampling at different scales. Different features may be observed at the different scales, that is, features perceived by a person are different when distances to a fixed object are different. In other words, when an object is imaged in a field of view at different sizes (the different scales), presented features are also different. Images at the different scales are suitable for different tasks. In this embodiment, to optimize the multi-task network, features at the different scales need to be fused. For example, objects in the image related to the vehicle have similarities in local regions, such as colors and textures. In this embodiment, fusion at the multiple scales may be specifically presented as including both global overall information and local detail information in an outputted feature map, to better perceive an environment around the vehicle. After the multi-task global shared first feature is obtained, feature screening is performed on the shared feature to select, as the second feature, a feature related to target detection.

S330: Determine a comprehensive feature based on the first feature and the second feature, the comprehensive feature being used for representing a feature obtained by fusing the multiple feature vectors corresponding to the images at the different scales.

The multiple feature vectors at the multiple scales in the first feature, for example, a first feature vector at a first scale and a second feature vector at a second scale, may be obtained, and then a first detection-related feature vector is extracted from the first feature vector at the first scale. The first detection-related feature vector is mapped to a segmentation feature space, to respectively generate a first interaction parameter vector and a second interaction parameter vector that are at the first scale. The segmentation feature space may be formed based on a feature related to semantic segmentation and selected by performing feature screening on the multi-task global shared first feature. The first interaction parameter vector and the second interaction parameter vector are obtained through mapping of a same feature. The first feature vector, the first interaction parameter vector, and the second interaction parameter vector that are at the first scale are weighted for multiple times to obtain a fused first comprehensive feature vector at the first scale. A second detection-related feature vector is extracted from the second feature vector at the second scale, the second detection-related feature vector is mapped to the segmentation feature space, to respectively generate a third interaction parameter vector and a fourth interaction parameter vector that are at the second scale, where the third interaction parameter vector and the fourth interaction parameter vector are obtained through mapping of a same feature. Then the first comprehensive feature vector at the first scale is expanded to a dimension the same as a dimension of the second feature vector through an upsampling operation, and all elements in the first comprehensive feature vector and the second feature vector are added element-by-element to generate a new second feature vector after multi-scale fusion. The new second feature vector, the third interaction parameter vector, and the fourth interaction parameter vector are weighted for multiple times to obtain a fused second comprehensive feature vector at the second scale, and the second comprehensive feature vector may be determined as the comprehensive feature.

The first scale and the second scale are only any two of the multiple scales, and the first feature vector and the second feature vector are also only any two of the multiple feature vectors.

S340: Determine a target-detection prediction result based on the second feature.

For example, an accurate candidate region may be obtained based on the second feature, a candidate region feature map is extracted based on the accurate candidate region, and then a class of a target is determined based on the candidate region feature map, to output a class prediction result of target detection. For example, classes such as the pedestrian, the motor vehicle, and a traffic signal indicator near the vehicle may be detected based on the second feature.

S350: Determine a semantic-segmentation prediction result based on the comprehensive feature and the target-detection prediction result.

A semantic-segmentation prediction result for reference may be determined based on the comprehensive feature. Then, a class the same as a class in the semantic-segmentation prediction result for reference is selected from the classes in the target-detection prediction result. Then, the same class reaches a dimension the same as a quantity of classes in the semantic-segmentation prediction result for reference through padding 1, to obtain a new target-detection prediction result. Then, dot product and weighting are performed on the semantic-segmentation prediction result for reference based on the new target-detection prediction result, to obtain the final semantic-segmentation prediction result. For example, a manner of padding 1 may be as follows. Three classes, specifically [motor vehicle, non-motor vehicle, pedestrian], are outputted through detection, and logic values logits of the three classes are [2, 3, 5]. Five classes, specifically [motor vehicle, non-motor vehicle, pedestrian, cone, warning column], are outputted through segmentation. In this case, 1 may be padded to logits outputted through detection, and logits become [2, 3, 5, 1, 1], thereby implementing dimensional alignment.

S360: Determine a multi-task loss function based on the target-detection prediction result and the semantic-segmentation prediction result, and optimize training of the multi-task network based on the multi-task loss function.

The multi-task may include multiple subtasks. In this embodiment, the multi-task may include two subtasks, respectively a target-detection subtask and a semantic-segmentation subtask. It is assumed that, in a case that multiple tasks are simultaneously trained, for any subtask $T_i$, uncertainty brought by another task is $\delta_i$. For a classification task, assuming that $p(y_i|f^w(x))$ follows Boltzmann distribution, refer to the following formula:

$$-\log p\big(y_i|f^w(x)\big) = \frac{1}{\delta_i}f^w(x) - \log \sum_i^C e^{f^w(x)/\delta_i} \approx \frac{1}{\delta_i}\text{softmax}\big(f^w(x)\big) + \log\delta_i = \frac{1}{\delta_i}L_i + \log\delta_i$$

p represents probability distribution. i = 1 or 2. $y_i$ is a prediction output result (including the target-detection prediction result and the semantic-segmentation prediction result). $f^w(x)$ is a prediction output probability of a subtask, w represents a parameter, and f represents a mapping function. C represents a quantity of outputted classes (three classes or five classes). An activation function Softmax is a commonly used mathematical function, and is usually used in a multi-classification problem. The activation function Softmax maps a group of arbitrary real values to a range with probability significance, so that each value is between 0 and 1, and a sum of all the values is equal to 1. In a neural network, the Softmax is usually used to convert a network output into probability distribution for classification or probability prediction. A vector z = ($z_1$, $z_2$,...,$z_k$) is provided, and the Softmax function may be represented as:

$$\text{Sofxmax}(z_i) = \frac{e^{z_i}}{\sum_{j=1}^{k} e^{z_j}}$$

e is a natural constant, and k is a length of the vector z. The Softmax function converts each element in the vector z into a real number between 0 and 1, representing an importance degree or a probability of the element among all the elements. An output of the Softmax function may be considered as probability distribution, where each element represents a probability of a corresponding class. In the neural network, the Softmax is usually used as an activation function of a last output layer. The Softmax function may be used to cause the probability distribution outputted by the network clearer and more intuitive, so that classification or probability prediction is more easily performed. For a regression task, assuming that

$p(y_i|f^w(x))$ follows Laplace distribution, reference is made to the following formula:

$$-\log p\big(y_i|f^w(x)\big) = \frac{1}{\delta_i} ||y_i - f^w(x)|| + \log \delta_i = \frac{1}{\delta_i} L_i + \log \delta_i$$

A multi-task negative log-likelihood function may further be used to obtain the following uncertainty-based multi-task loss function:

$$-\log p(y_1, y_2|f^w(x)) = -\log(p(y_1|f^w(x)) \cdot p(y_2|f^w(x))) = \frac{1}{\delta_1} L_1 + \log \delta_1 + \frac{1}{\delta_2} L_2 + \log \delta_2$$

To adapt to a case that a subtask is incompletely annotated, a loss of the subtask may be further adaptively calculated based on the following loss function formula:

$$L_i = \begin{cases} 0, y_i \text{ is null} \\ f_{loss_i}(f^w(x), y_i), y_i \text{ is not null} \end{cases}$$

$L_i$ is a loss value of the subtask. $f_{loss_i}()$ is a loss function calculation formula of a subtask $T_i$. The Softmax is selected for a classification-class subtask, and a mean-square error MSE is selected for a regression-class subtask. The MSE is a commonly used loss function, and is used to measure a difference between a predicted value of a model and a true value. In a regression problem, the MSE is a widely used loss function. A group of predicted values $\hat{y} = (\hat{y}_1, \hat{y}_2, ..., \hat{y}_n)$ and corresponding true values $y = (y_1, y_2, ..., y_n)$ are provided. The MSE may be defined as:

$$MSE = \frac{1}{n} \sum_{i=1}^{n} (\hat{y}_i - y_i)^2$$

n is a quantity of samples. An average value of square errors between the predicted values and the true values is calculated by using the MSE. A smaller value of the MSE indicates that a result predicted by the model is closer to a true value. The MSE may be used in supervised learning, for example, linear regression, polynomial regression, and a neural network. In the neural network, the MSE is usually used in a regression problem, such as predicting a house price or predicting a stock price. The MSE loss function is optimized, so that a parameter of the model can be adjusted to minimize an error between the predicted value and the true value, thereby improving performance of the model.

It can be learned that, in this embodiment, the function of multi-task information exchange is implemented by using the training framework of the multi-task network, to flexibly adapt to the cases of misalignment of subtask annotation classes and incomplete data annotation, and training is performed by using the existing data fully, so that the multi-task network implements accurate recognition in a lack of data annotation, to better perceive an environment around the vehicle, and provide accurate guidance information for subsequent decision-making and execution of an autonomous driving system.

In a possible embodiment, obtaining a data training set includes: obtaining an initial image set, and determining an image-class distribution status through semantic-segmentation annotation and target-detection annotation for a first-class image in the initial image set, the image-class distribution status including classes and total quantities; determining an image class with a largest total quantity based on the image-class distribution status; duplicating an image of another image class based on a quantity ratio of a first total quantity corresponding to the image class with the largest total quantity to a second total quantity corresponding to the another image class, to cause the total quantity of the another image class to reach the first total quantity, where the duplicated image is a second-class image, and the first-class image and the second-class image form an extended image set; and performing balanced sampling of different image classes on the extended image set, to obtain the data training set.

Each class included in each image in the initially obtained image set related to the vehicle may be counted based on segmentation annotation, to count classes included in each image. Then, whether each class included in each image has a detection annotation is determined. If the class has a detection annotation, a quantity of detection boxes of the class in a corresponding image is counted, and the quantity of detection boxes is determined as a quantity of the class. If the class has no detection annotation, the quantity of the class is 1 by default. Quantities of classes in all the images in the initial image set are counted, and accumulation is performed to obtain the multi-task image-class distribution status, where a data-class distribution status may be: {class: total quantity}. For example, the data-class distribution status may include:

{pedestrian: 47}, {motor vehicle: 58}, {warning column: 20}, {cone: 18}, and {animal: 10}.

A quantity ratio of a total quantity of remaining classes in the data set to the total quantity of the class with the largest quantity is calculated based on the total quantity of the class with the largest quantity and based on the image-class distribution status obtained through counting, and the image set is expanded based on the quantity ratio, to cause the total quantity of the remaining classes to be the same as the total quantity of the class with the largest quantity. For example, the class with the largest quantity is the pedestrian, a counted total quantity of pedestrians is 50, and a total quantity of cones is 10. In this case, 50 / 10 = 5. The quantity of cones may be expanded by five times, so that the total quantity of cones reaches 50, to obtain an expanded image set related the vehicle. Then, class balanced sampling is performed on the expanded image set related the vehicle, so that samples of a same quantity are used for the classes.

It can be learned that, in this embodiment, on one hand, a training data set that is relatively balanced in classes can be effectively generated with reference to a correlation between data annotation of semantic segmentation and target detection, and is compatible with misalignment between data amounts and classes of semantic segmentation and target detection, to improve a generalization capability of the multi-task model for small-sample classes in semantic segmentation and target detection. On the other hand, annotation classes of semantic segmentation and target detection can be flexibly configured based on an application requirement, and annotation amounts of two subtasks may also be different, to greatly reduce a requirement on data annotation.

In a possible embodiment, the multiple feature vectors include a first feature vector and a second feature vector, and the multiple detection-related feature vectors include a first detection-related feature vector and a second detection-related feature vector. Determining the comprehensive feature based on the first feature and the second feature includes: mapping the first detection-related feature vector to a segmentation feature space, to generate a first interaction parameter and a second interaction parameter, the segmentation feature space being used for representing a set space including multiple segmentation-related feature vectors obtained by performing feature extraction on the multiple feature vectors that are at the different scales; performing feature fusion based on the first interaction parameter, the second interaction parameter, and the first feature vector, to obtain a first comprehensive feature; fusing the first comprehensive feature and the second feature vector, to generate a new second feature vector; mapping the second detection-related feature vector to the segmentation feature space, to generate a third interaction parameter and a fourth interaction parameter; and performing feature fusion based on the third interaction parameter, the fourth interaction parameter, and the new second feature vector, to obtain a second comprehensive feature, and determining the second comprehensive feature as the comprehensive feature.

For example, a feature vector f1 at a scale m1 and a feature vector f2 at a scale m2 in the first feature may be obtained, and then a detection-related feature vector d1 is extracted from the feature vector f1 at the scale m1. The detection-related feature vector d1 is mapped to the segmentation feature space, to respectively generate two interaction parameter vectors a1 and b1 that are at the scale m1, where a1 and b1 are obtained through mapping of a same feature. The feature vector f1 and the interaction parameter vectors a1 and b1 that are at the scale m1 are weighted for multiple times to obtain a fused comprehensive feature vector c1 at the scale m1.

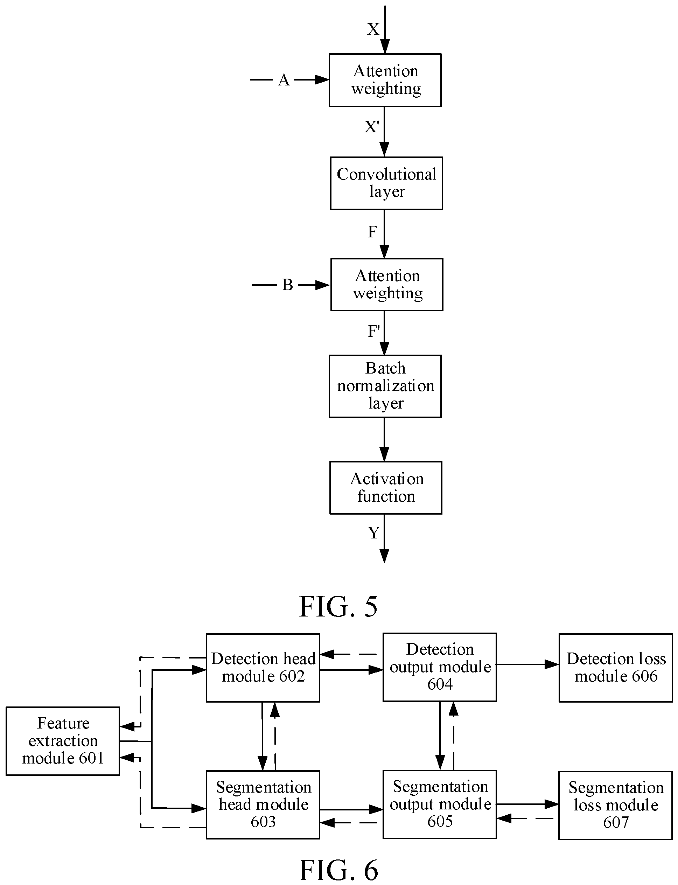

The weighting for the multiple times during obtaining c1 through weighting for the multiple times may include two attention weighting operations. FIG. 5 is a schematic diagram of a feature fusion method according to an embodiment of the present disclosure. As shown in FIG. 5, the following steps are specifically included. Attention weighting is first performed on an inputted feature vector X and an inputted interaction parameter vector A, to obtain a weighted feature X'. The inputted feature vector X may be the first feature, and the interaction parameter vector A may be one of interaction parameters obtained by mapping a detection-related feature vector to the segmentation feature space. The feature vector X and the inputted interaction parameter vector A are weighted first before a convolutional layer, which may be understood as providing guidance for the semantic-segmentation prediction result based on the target-detection prediction result, and indicating in advance a channel with more effective information. Feature extraction is performed on the weighted feature X' to obtain a new feature vector F. Feature extraction is performed, through the convolutional layer, on the weighted feature X', for example, a vehicle texture feature or a vehicle color feature in the image related to the vehicle. Attention weighting is performed on the new feature vector F and an inputted interaction parameter vector B, to obtain a weighted new feature vector F'. The interaction parameter vector B may be an interaction parameter that is not the same as A and that is obtained by mapping the detection-related feature vector to the segmentation feature space. The new feature vector F and the inputted interaction parameter vector B are weighted after the convolutional layer, which may be understood as alignment of a feature of target detection and a feature of semantic segmentation in a channel dimension. The weighted new feature vector F' sequentially passes through a batch normalization layer and an activation function, to output a feature vector Y. The batch normalization layer is used before the activation function, so that output accuracy can be improved, and a more stable distribution result can be outputted. Batch normalization is a commonly used optimization technology of a neural network, and is used to accelerate training of the neural network and improve generalization performance of a model. The batch normalization normalizes an intermediate layer of the neural network, so that a mean value and a variance of inputted data remain stable, thereby reducing a problem of an internal covariate shift in the network. The activation function is a non-linear function, is usually applied to a neural network, and is used to perform non-linear transformation on an output of a neuron, thereby improving an expression capability and a fitting capability of the network. A main function of the activation function is to map the output of the neuron to a non-linear space, so that the neural network can better process a complex non-linear problem. An output value after processing of the activation function may be used to represent an excitation degree of the neuron. The activation function is usually applied to a hidden layer and an output layer of the neural network. Commonly used activation functions include a Sigmoid function, a ReLU function, a Tanh function, a Softmax function, and the like.

After the comprehensive feature vector c1 is obtained, a detection-related feature vector d2 is extracted from the feature vector f2 at the scale m2, and the detection-related feature vector d2 is mapped to the segmentation feature space, to respectively generate two interaction parameter vectors a2 and b2 that are at the scale m2, where a2 and b2 are obtained through mapping of a same feature. Then, the comprehensive feature vector c1 at the scale m1 is expanded to a dimension the same as a dimension of the feature vector f2 through an upsampling operation, and all elements in c1 and f2 are added element-by-element to generate a new feature vector f2 after multi-scale fusion. The new feature vector f'2 and the interaction parameter vectors a2 and b2 are weighted for multiple times to obtain a fused comprehensive feature vector c2 at the scale m2, and the comprehensive feature vector c2 may be determined as the comprehensive feature.

It can be learned that, in this embodiment, interaction parameters transformed based on scale features of target detection are weighted, and two attention weighting operations are performed, to strengthen a correlation between target detection and semantic segmentation.

In a possible embodiment, the multiple feature vectors further include a third feature vector, and the multiple detection-related feature vectors further include a third detection-related feature vector. After the second comprehensive feature is obtained, the method further includes: fusing the second comprehensive feature and the third feature vector, to generate a new third feature vector; mapping the third detection-related feature vector to the segmentation feature space, to generate a fifth interaction parameter and a sixth interaction parameter; and performing feature fusion based on the fifth interaction parameter, the sixth interaction parameter, and the new third feature vector, to obtain a third comprehensive feature, and determining the third comprehensive feature as the comprehensive feature.

For example, the feature vector f1 at the scale m1, the feature vector f2 at the scale m2, and a feature vector f3 at a scale m3 in the first feature may be obtained. After the comprehensive feature vector c2 is obtained, a detection-related feature vector d3 is extracted from the feature vector f3 at the scale m3, and the detection-related feature vector d3 is mapped to the segmentation feature space, to respectively generate two interaction parameter vectors a3 and b3 that are at the scale m3, where a3 and b3 are obtained through mapping of a same feature. Then, the comprehensive feature vector c2 at the scale m2 is expanded to a dimension the same as a dimension of the feature vector f3 through an upsampling operation, and all elements in c2 and f3 are added element-by-element to generate a new feature vector after multi-scale fusion. The new feature vector f'3 and the interaction parameter vector a3 are weighted to obtain a weighted feature f"3. Image feature extraction is performed on the weighted feature f'3 to obtain a new feature vector e. The new feature vector e and the interaction parameter vector b3 are weighted to obtain a weighted new feature vector e'. The weighted new feature vector e' sequentially passes through the batch normalization layer and the activation function layer, to obtain a comprehensive feature c3, and the comprehensive feature c3 may be determined as the comprehensive feature.

One image may have multiple different scales. In this embodiment, only any three of the multiple scales are extracted as an example for description. When there are only two scales, the comprehensive feature c2 may be determined as the comprehensive feature. When there are only three scales, the comprehensive feature c3 may be determined as the comprehensive feature. The comprehensive feature is obtained by fusing features at all scales in the image.

It can be learned that, in this embodiment, performance of the model can be well improved by fusing the features at the multiple scales.

In a possible embodiment, performing feature fusion based on the first interaction parameter, the second interaction parameter, and the first feature vector, to obtain the first comprehensive feature includes: determining a new first feature vector based on a weight of the first interaction parameter and a weight of the first feature vector, the weight of the first interaction parameter and the weight of the first feature vector being respectively calculated based on different parts of the first interaction parameter and the first feature vector; performing feature extraction on the new first feature vector, to obtain a fourth feature vector; and determining a new fourth feature vector based on a weight of the second interaction parameter and a weight of the fourth feature vector, the weight of the second interaction parameter and the weight of the fourth feature vector being respectively calculated based on different parts of the second interaction parameter and the fourth feature vector, and the first comprehensive feature being determined based on the new fourth feature vector.

Weights of the interaction parameter and the feature vector are calculated through an attention mechanism, and different weights are assigned based on different parts of inputted data, to control attention degrees of the multi-task network for the different parts, thereby focusing attention of the multi-task network on a key part of the inputted data, and improving a representation capability and a generalization capability of the multi-task network.

A weight of a feature vector M and a weight of an interaction parameter vector N are calculated through the attention mechanism, and the weights are weighted, to obtain a weighted feature M'. Image feature extraction is performed on the weighted feature M', to obtain a new feature vector O. A weight of the new feature vector O and a weight of an interaction parameter vector P are calculated through the attention mechanism, and the weights are weighted, to obtain a weighted new feature vector O'. The weighted new feature vector O' sequentially passes through the batch normalization layer and the activation function to obtain the first comprehensive feature.

It can be learned that, in this embodiment, two attention weighting operations are performed, to strengthen the correlation between target detection and semantic segmentation.

In a possible embodiment, determining the semantic-segmentation prediction result based on the comprehensive feature and the target-detection prediction result includes: determining a first semantic-segmentation prediction result based on the comprehensive feature; determining, from the target-detection prediction result, a second class that is the same as a first class in the first semantic-segmentation prediction result; performing dimensional alignment on the second class based on the first class, to cause a quantity of the second class to be the same as a quantity of the first class, to obtain a new target-detection prediction result; and determining a second semantic-segmentation prediction result based on the new target-detection prediction result and the first semantic-segmentation prediction result, and determining the second semantic-segmentation prediction result as the semantic-segmentation prediction result.

A semantic-segmentation prediction result for reference may be determined based on the comprehensive feature. Then, a class the same as a class in the semantic-segmentation prediction result for reference is selected from the classes in the target-detection prediction result. Then, the same class reaches a dimension the same as a quantity of classes in the semantic-segmentation prediction result for reference through padding 1, to obtain a new target-detection prediction result. Then, dot product and weighting are performed on the semantic-segmentation prediction result for reference based on the new target-detection prediction result, to obtain the final semantic-segmentation prediction result. For example, a manner of padding 1 may be as follows. Three classes, specifically [motor vehicle, non-motor vehicle, pedestrian], are outputted through detection, and logic values logits of the three classes are [2, 3, 5]. Five classes, specifically [motor vehicle, non-motor vehicle, pedestrian, cone, warning column], are outputted through segmentation. In this case, 1 may be padded to logits outputted through detection, and logits become [2, 3, 5, 1, 1], thereby implementing dimensional alignment.

Based on feature interaction and output interaction, a partial label training for forward inference and back propagation is added. FIG. 6 is a schematic diagram of a partial label training method according to an embodiment of the present disclosure. As shown in FIG. 6, a solid single arrow is a forward-inference path, and a dashed-line single arrow is a back-propagation path. In the forward-inference path, for a global shared feature outputted by a feature extraction module 601, a detection feature and logits of detection output classification are first obtained respectively by using a detection head module 602 and a detection output module 604 successively, and a detection loss is calculated by using a detection loss module 606 based on logits of the detection output classification. The detection head module 602 is configured to extract a detection-related feature based on the global shared feature, the detection output module 604 is configured to determine logits of a detection class based on the detection feature, and the detection loss module 606 is configured to determine the detection loss based on logits of the detection output classification. Then, the detection feature and the global shared feature are inputted into a segmentation head module 603 for fusion, to obtain a comprehensive feature. The segmentation head module 603 includes a convolutional module and an upsampling module. The convolutional module is configured to map the detection-related feature to the segmentation feature space, to enhance interaction between detection and segmentation. The upsampling module is configured to increase a resolution of an image, to improve image quality, or increase details of a feature map. Then, the fused comprehensive feature and logits of the detection output classification are inputted into a segmentation output module 605, to obtain a final segmentation output result, and a segmentation loss is determined by using a segmentation loss module 607 based on the segmentation output result. The segmentation output module 605 is configured to perform autocorrelation weighting on class prediction outputted by target detection and semantic segmentation, to implement class output alignment between subtasks. The segmentation loss module 607 is configured to calculate the segmentation loss based on the segmentation output result. As shown in FIG. 6, in the back-propagation path, because logits of the detection class is integrated into the segmentation output, when gradient back propagation is performed on the segmentation loss, a part of a gradient flow flows to the segmentation head module 603 through the segmentation output module 605, and a part of the gradient flow flows to the detection output module 604 through logits of the detection class. Next, a gradient of the segmentation output module 605 is propagated to the segmentation head module 603, and a gradient of the detection output module 604 is propagated to the detection head module 602. Because the detection-related feature is integrated into the segmentation head module 603, a branch gradient stream in the segmentation head module 603 is also back propagated to the detection head module 602 through the detection feature. Therefore, the detection head module 602 obtains the two gradient flows and combines the two gradient flows to optimize the detection head module 602. Finally, the gradient flows of the two branches, namely, segmentation and detection, are back propagated to the feature extraction module 601, and are together used to supervise the feature extraction module 601.

It can be learned that, in this embodiment, the detection prediction result is fused into the segmentation prediction result, and the prediction outputs of the two subtasks are fused, thereby strengthening a connection between the two subtasks. In addition, in the partial label training manner, even in a case that an annotation of a true value of detection is missing, when segmentation is learned, detection is synchronously optimized correspondingly, so that the entire network can be supervised and training efficiency can be improved. In addition, data with an incomplete annotation may also be used for training, to expand the entire data set, alleviate a problem that resources for annotating the data are strained, and reduce a requirement and difficulty of annotating the data.

In a possible embodiment, the multi-task includes multiple subtasks, and the multiple subtasks include target detection and semantic segmentation. Determining the multi-task loss function based on the target-detection prediction result and the semantic-segmentation prediction result includes: determining a target-detection loss value $L_1$ based on the target-detection prediction result, and determining a semantic-segmentation loss value $L_2$ based on the semantic-segmentation prediction result, a subtask loss value $L_i$ satisfying the following formula:

$$L_i = \begin{cases} 0, & y_i \text{ is null} \\ f_{loss_i}(f^w(x), y_i), & y_i \text{ is not null} \end{cases}$$

where $y_i$ is a subtask prediction result, $i = 1$ or 2, $f^w(x)$ is a subtask prediction output probability, and $f_{loss_i}()$ is a loss-function calculation formula; and determining the multi-task loss function based on the subtask loss value $L_i$.

The Softmax is selected for a classification-class subtask, and the MSE is selected for a regression-class subtask. A semantic segmentation task is the classification-class subtask. The target detection task includes a classification branch and a regression branch, that is, includes two classes of loss functions. The Softmax may be selected for the classification task, and the MSE may be selected for the regression task.

It can be learned that, in this embodiment, a case that an annotation of a subtask is incomplete can be adapted, and the loss value can be adaptively calculated.

In a possible embodiment, determining the multi-task loss function based on the subtask loss value $L_i$ includes: respectively determining subtask weights $\delta_i$ based on uncertainty of the multi-task; and determining the multi-task loss function $-\log p(y_1, y_2|f^w(x))$ by using a negative log-likelihood loss function based on the subtask loss value $L_i$ and the subtask weights $\delta_i$, the multi-task loss function being calculated based on the following formula:

$$-\log p(y_1, y_2|f^w(x)) = \frac{1}{\delta_1}L_1 + \log \delta_1 + \frac{1}{\delta_2}L_2 + \log \delta_2$$

where p represents probability distribution.

In a case that multiple tasks are simultaneously trained, for any task $T_i$, uncertainty brought by another task is $\delta_i$. For a classification task, assuming that $p(y_i|f^w(x))$ follows Boltzmann distribution, reference is made to the following formula:

$$-\log p(y_i|f^w(x)) = \frac{1}{\delta_i}f^w(x) - \log \sum_i^C e^{f^w(x)/\delta_i} \approx \frac{1}{\delta_i}\text{softmax}(f^w(x)) + \log\delta_i = \frac{1}{\delta_i}L_i + \log\delta_i$$

p represent probability distribution. $i = 1$ or 2. $y_i$ is a prediction output result (including the target-detection prediction result and the semantic-segmentation prediction result). $f^w(x)$ is a prediction output probability of a subtask, w represents a parameter, and f represents a mapping function. C represents a quantity of outputted classes. For a regression task, assuming that $p(y_i|f^w(x))$ follows Laplace distribution, refer to the following formula:

$$-\log p(y_i|f^w(x)) = \frac{1}{\delta_i}||y_i - f^w(x)|| + \log \delta_i = \frac{1}{\delta_i}L_i + \log \delta_i$$

A multi-task negative log-likelihood function may further be used to obtain the following uncertainty-based multi-task loss function:

$$-\log p(y_1, y_2|f^w(x)) = -\log(p(y_1|f^w(x)) \cdot p(y_2|f^w(x))) = \frac{1}{\delta_1}L_1 + \log \delta_1 + \frac{1}{\delta_2}L_2 + \log \delta_2$$

It can be learned that, in this embodiment, modeling is performed based on a conditional probability predicted and outputted by the network, and uncertainty of each subtask is calculated, to dynamically assign a training weight to the subtask, so that a multi-task training process converges faster.

In a possible embodiment, the multiple images are images related to a vehicle.

The images related to the vehicle may be an image of the vehicle, an image of an environment surrounding the vehicle, and an image of an environment surrounding a road. The vehicle is detected based on the image of the vehicle, such as a car, a van, or a bicycle. Various objects around the vehicle, such as a pedestrian and an obstacle, are detected based on the image of the environment surrounding the vehicle. Road signs, such as a traffic sign, a lane line, a sign of a parking space, and a crosswalk for pedestrians, are detected based on the image of the environment surrounding the road.

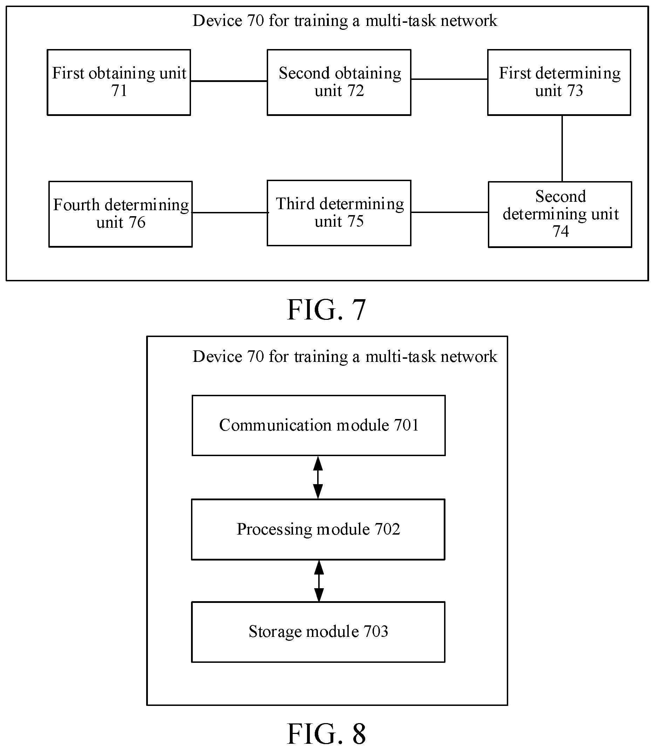

Consistent with the foregoing embodiments, FIG. 7 is a block diagram of composition of functional units of a device for training a multi-task network according to an embodiment of the present disclosure. A device 70 for training a multi-task network includes a first obtaining unit 71, configured to obtain a data training set, the data training set including multiple images; a second obtaining unit 72, configured to perform feature extraction on the multiple images in the data training set, to obtain a first feature and a second feature, the first feature including multiple feature vectors corresponding to the multiple images at different scales, and the second feature being multiple detection-related feature vectors obtained by performing feature extraction on the multiple feature vectors that are at the different scales; a first determining unit 73, configured to determine a comprehensive feature based on the first feature and the second feature, the comprehensive feature being used for representing a feature obtained by fusing the multiple feature vectors corresponding to the images at the different scales; a second determining unit 74, configured to determine a target-detection prediction result based on the second feature; a third determining unit 75, configured to determine a semantic-segmentation prediction result based on the comprehensive feature and the target-detection prediction result; and a fourth determining unit 76, configured to determine a multi-task loss function based on the target-detection prediction result and the semantic-segmentation prediction result.

In a possible embodiment, in an aspect of data obtaining, the first obtaining unit 71 is specifically configured to perform the following steps. FIG. 4 is a schematic flowchart of a method for obtaining a data training set according to an embodiment of the present disclosure. The following steps are specifically included. S410: Determine a class set in a data set. For example, any picture P related to a vehicle in the existing data set may be first obtained, then all classes, for example, a motor vehicle, a non-motor vehicle, a pedestrian, and an animal, included in the picture P may be counted based on segmentation annotation, and the class set S is formed based on the classes. S420: Determine a detection quantity of each class based on the class set. For each class in the class set S, whether the class has a detection annotation is determined. If a class has a detection annotation, a quantity N of detection boxes of the class in the picture P is counted, to obtain a quantity of the class as N. If a class has no detection annotation, a quantity of the class is 1 by default. For example, the class may be the pedestrian, and a quantity of detection boxes of the pedestrian in the picture P is 3. In this case, it may be determined that there are three pedestrians in the picture P. S430: Count classes of all images in the data set and the detection quantities corresponding to the classes, to obtain a data-class distribution status. Steps of S410 and S420 are cycled, to count the quantities of the classes in all the pictures in the entire data set, and accumulation is performed to obtain the overall data-class distribution status of the data set under multi-task. The data-class distribution status may be: {class: total quantity}. S440: Determine an image class with a largest total quantity based on the data-class distribution status, and expand the data set based on the image class with the largest total quantity. A ratio of a total quantity of remaining classes in the data set to the total quantity of the class with the largest quantity is calculated based on the total quantity of the class with the largest quantity and based on the multi-task data-class distribution status obtained through counting, and a sample set of the other classes is expanded based on the ratio, to obtain an expanded data set. For example, the class with the largest counted quantity is the motor vehicle, a total quantity of motor vehicles is 90, and a total quantity of the class of the non-motor vehicle in the other classes is 20. In this case, $90 / 20 = 4.5$. The quantity of the class of the non-motor vehicle may be expanded by 4.5 times, so that the total quantity of non-motor vehicles reaches 90, to expand the data set. S450: Perform balanced sampling of different image classes on the expanded data set, to obtain a data training set. During training, samples of a same quantity are sampled for all classes in the expanded data set. For example, 50 samples may be obtained for each of classes such as the motor vehicle, the non-motor vehicle, the pedestrian, and an obstacle. It can be learned that counting is performed in combination based on the classes of semantic segmentation and the quantity of target detection, and the data set is expanded based on the ratio, thereby achieving balance of data classes under multi-task.

In a possible embodiment, in an aspect of feature obtaining, the second obtaining unit 72 is specifically configured to: Feature extraction performed on the image related to the vehicle in the data training set is global feature extraction for a multi-task feature. The multi-task may include target detection and semantic segmentation. The first feature belongs to a multi-task global shared feature. The image may have multiple scales. The multiple scales refer to signal sampling at different scales. Different features may be observed at the different scales, that is, features perceived by a person are different when distances to a fixed object are different. In other words, when an object is imaged in a field of view at different sizes (the different scales), presented features are also different. Images at the different scales are suitable for different tasks. In this embodiment, to optimize the multi-task network, features at the different scales need to be fused. For example, objects in the image related to the vehicle have similarities in local regions, such as colors and textures. In this embodiment, fusion at the multiple scales may be specifically presented as including both global overall information and local detail information in an outputted feature map, to better perceive an environment around the vehicle. After the multi-task global shared first feature is obtained, feature screening is performed on the shared feature to select, as the second feature, a feature related to target detection.

In a possible embodiment, in an aspect of feature fusion, the first determining unit 73 is specifically configured to: The multiple feature vectors at the multiple scales in the first feature, for example, a first feature vector at a first scale and a second feature vector at a second scale, may be obtained, and then a first detection-related feature vector is extracted from the first feature vector at the first scale. The first detection-related feature vector is mapped to a segmentation feature space, to respectively generate a first interaction parameter vector and a second interaction parameter vector that are at the first scale. The segmentation feature space may be formed based on a feature related to semantic segmentation and selected by performing feature screening on the multi-task global shared first feature. The first interaction parameter vector and the second interaction parameter vector are obtained through mapping of a same feature. The first feature vector, the first interaction parameter vector, and the second interaction parameter vector that are at the first scale are weighted for multiple times to obtain a fused first comprehensive feature vector at the first scale. A second detection-related feature vector is extracted from the second feature vector at the second scale, the second detection-related feature vector is mapped to the segmentation feature space, to respectively generate a third interaction parameter vector and a fourth interaction parameter vector that are at the second scale, where the third interaction parameter vector and the fourth interaction parameter vector are obtained through mapping of a same feature. Then the first comprehensive feature vector at the first scale is expanded to a dimension the same as a dimension of the second feature vector through an upsampling operation, and all elements in the first comprehensive feature vector and the second feature vector are added element-by-element to generate a new second feature vector after multi-scale fusion. The new second feature vector, the third interaction parameter vector, and the fourth interaction parameter vector are weighted for multiple times to obtain a fused second comprehensive feature vector at the second scale, and the second comprehensive feature vector may be determined as the comprehensive feature. The first scale and the second scale are only any two of the multiple scales, and the first feature vector and the second feature vector are also only any two of the multiple feature vectors.

In a possible embodiment, in an aspect of determining a detection output result, the second determining unit 74 is specifically configured to: For example, an accurate candidate region may be obtained based on the second feature, a candidate region feature map is extracted based on the accurate candidate region, and then a class of a target is determined based on the candidate region feature map, to output a class prediction result of target detection. For example, classes such as the pedestrian, the motor vehicle, and a traffic signal indicator near the vehicle may be detected based on the second feature.

In a possible embodiment, in an aspect of determining a segmentation output result, the third determining unit 75 may be specifically configured to: A semantic-segmentation prediction result for reference may be determined based on the comprehensive feature. Then, a class the same as a class in the semantic-segmentation prediction result for reference is selected from the classes in the target-detection prediction result. Then, the same class reaches a dimension the same as a quantity of classes in the semantic-segmentation prediction result for reference through padding 1, to obtain a new target-detection prediction result. Then, dot product and weighting are performed on the semantic-segmentation prediction result for reference based on the new target-detection prediction result, to obtain the final semantic-segmentation prediction result. For example, a manner of padding 1 may be as follows. Three classes, specifically [motor vehicle, non-motor vehicle, pedestrian], are outputted through detection, and logic values logits of the three classes are [2, 3, 5]. Five classes, specifically [motor vehicle, non-motor vehicle, pedestrian, cone, warning column], are outputted through segmentation. In this case, 1 may be padded to logits outputted through detection, and logits become [2, 3, 5, 1, 1], thereby implementing dimensional alignment.

In a possible embodiment, in an aspect of determining a loss, the fourth determining unit 76 is specifically configured to: The multi-task may include multiple subtasks. In this embodiment, the multi-task may include two subtasks, respectively a target-detection subtask and a semantic-segmentation subtask. It is assumed that, in a case that multiple tasks are simultaneously trained, for any subtask $T_i$, uncertainty brought by another task is $\delta_i$. For a classification task, assuming that $p(y_i|f^w(x))$ follows Boltzmann distribution, reference is made to the following formula:

$$-\log p\big(y_i|f^w(x)\big) = \frac{1}{\delta_i} f^w(x) - \log \sum_i^c e^{f^w(x)/\delta_i} \approx \frac{1}{\delta_i} \mathrm{softmax}\big(f^w(x)\big) + \log\delta_i = \frac{1}{\delta_i} L_i + \log\delta_i$$

p represents probability distribution. i = 1 or 2. $y_i$ is a prediction output result (including the target-detection prediction result and the semantic-segmentation prediction result). $f^w(x)$ is a prediction output probability of a subtask, w represents a parameter, and f represents a mapping function. C represents a quantity of outputted classes (three classes or five classes). An activation function Softmax is a commonly used mathematical function, and is usually used in a multi-classification problem. The activation function Softmax maps a group of arbitrary real values to a range with probability significance, so that each value is between 0 and 1, and a sum of all the values is equal to 1. In a neural network, the Softmax is usually used to convert a network output into probability distribution for classification or probability prediction. A vector z = ($z_1$, $z_2$, ..., $z_k$) is provided, and the Softmax function may be represented as:

$$\text{Sofxmax}(z_i) = \frac{e^{z_i}}{\sum_{j=1}^{k} e^{z_j}}$$

e is a natural constant, and k is a length of the vector z. The Softmax function converts each element in the vector z into a real number between 0 and 1, representing an importance degree or a probability of the element among all the elements. An output of the Softmax function may be considered as probability distribution, where each element represents a probability of a corresponding class. In the neural network, the Softmax is usually used as an activation function of a last output layer. The Softmax function may be used to cause the probability distribution outputted by the network clearer and more intuitive, so that classification or probability prediction is more easily performed. For a regression task, assuming that $p(y_i|f^w(x))$ follows Laplace distribution, refer to the following formula:

$$-\log p\left(y_i|f^w(x)\right) = \frac{1}{\delta_i} ||y_i - f^w(x)|| + \log \delta_i = \frac{1}{\delta_i} L_i + \log \delta_i$$

A multi-task negative log-likelihood function may further be used to obtain the following uncertainty-based multi-task loss function:

$$-\log p(y_1, y_2|f^w(x)) = -\log(p(y_1|f^w(x)) \cdot p(y_2|f^w(x))) = \frac{1}{\delta_1} L_1 + \log \delta_1 + \frac{1}{\delta_2} L_2 + \log \delta_2$$

To adapt to a case that a subtask is incompletely annotated, a loss of the subtask may be further adaptively calculated based on the following loss function formula:

$$L_i = \begin{cases} 0, y_i \text{ is null} \\ f_{loss_i}(f^w(x), y_i), y_i \textit{ is not null} \end{cases}$$

$L_i$ is a loss value of the subtask. $f_{loss_i}()$ is a loss function calculation formula of a subtask $T_i$. The Softmax is selected for a classification-class subtask, and a mean-square error MSE is selected for a regression-class subtask. The MSE is a commonly used loss function, and is used to measure a difference between a predicted value of a model and a true value. In a regression problem, the MSE is a widely used loss function. A group of predicted values $\hat{y} = (\hat{y}_1, \hat{y}_2, ..., \hat{y}_n)$ and corresponding true values y = ($y_1$, $y_2$, ..., $y_n$) are provided. The MSE may be defined as:

$$MSE = \frac{1}{n} \sum_{i=1}^{n} (\hat{y}_i - y_i)^2$$

n is a quantity of samples. An average value of square errors between the predicted values and the true values is calculated by using the MSE. A smaller value of the MSE indicates that a result predicted by the model is closer to a true value. The MSE may be used in supervised learning, for example, linear regression, polynomial regression, and a neural network. In the neural network, the MSE is usually used in a regression problem, such as predicting a house price or predicting a stock price. The MSE loss function is optimized, so that a parameter of the model can be adjusted to minimize an error between the predicted value and the true value, thereby improving performance of the model.

It may be understood that because the method embodiments and the device embodiments are different presentation forms of a same technical concept, content of the method embodiments in the present disclosure should be synchronously adapted to the device embodiments, and details are not described herein again.

When an integrated unit is used, FIG. 8 is a block diagram of composition of functional units of another device for training a multi-task network according to an embodiment of the present disclosure. As shown in FIG. 8, a device 70 for training a multi-task network includes a processing module 702 and a communication module 701. The processing module 702 is configured to control and manage an action of the device 70 for training the multi-task network, for example, perform steps of the first obtaining unit 71, the second obtaining unit 72, the first determining unit 73, the second determining unit 74, the third determining unit 75, and the fourth determining unit 76, and/or perform another process of the technology described in this specification. The communication module 701 is configured for interaction between the device 70 for training the multi-task network and another device. As shown in FIG. 8, the device 70 for training the multi-task network may further include a storage module 703. The storage module 703 is configured to store program code and data of the device 70 for training the multi-task network.

The processing module 702 may be a processor or a controller, for example, may be a central processing unit (Central Processing Unit, CPU), a general-purpose processor, a digital signal processor (Digital Signal Processor, DSP), an ASIC, an FPGA or another programmable logic device, a transistor logic device, a hardware component, or any combination thereof. The processing module 702 may implement or execute various example logical blocks, modules, and circuits described with reference to the content of the present disclosure. The processor may alternatively be a combination for implementing a computing function, for example, a combination of one or more microprocessors or a combination of a DSP and a microprocessor. The communication module 701 may be a transceiver, an RF circuit, a communication interface, or the like. The storage module 703 may be a memory.

All related content of the scenarios involved in the foregoing method embodiments may be quoted to functional descriptions of corresponding functional modules, and details are not described herein again. The device 70 for training the multi-task network may perform the method for training the multi-task network shown in FIG. 3.

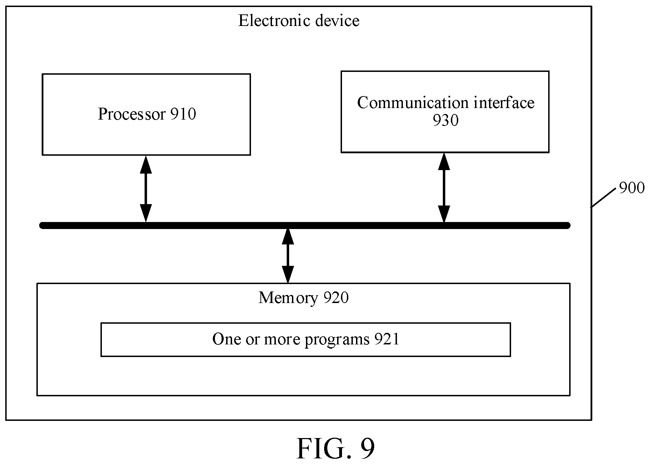

FIG. 9 is a schematic diagram of a structure of an electronic device according to an embodiment of the present disclosure. As shown in FIG. 9, an electronic device 900 includes a processor 910, a memory 920, a communication interface 930, and one or more programs 921. The one or more programs are stored in the memory and configured to be executed by the processor. When the programs are executed, some or all of the steps of any method for training the multi-task network recorded in the foregoing method embodiments are included. The processor, the memory, and the communication interface are connected to each other and complete communication work with each other.

The memory may be a volatile memory such as a dynamic random access memory DRAM, or may be a non-volatile memory such as a hard disk drive. The memory is configured to store a group of executable program code. The processor is configured to invoke the executable program code stored in the memory, to perform some or all of the steps of any method for training the multi-task network recorded in the foregoing embodiments of the method for training the multi-task network.

It can be learned that, when the electronic device 900 described in this embodiment of the present disclosure is used, the data training set is first obtained, the data training set including the multiple images; then feature extraction is performed on the multiple images in the data training set, to obtain the first feature and the second feature, the first feature including the multiple feature vectors corresponding to the multiple images at the different scales, and the second feature being the multiple detection-related feature vectors obtained by performing feature extraction on the multiple feature vectors that are at the different scales; then the comprehensive feature is determined based on the first feature and the second feature, the comprehensive feature being used for representing the feature obtained by fusing the multiple feature vectors corresponding to the images at the different scales; then the target-detection prediction result is determined based on the second feature; then the semantic-segmentation prediction result is determined based on the comprehensive feature and the target-detection prediction result; and finally the multi-task loss function is determined based on the target-detection prediction result and the semantic-segmentation prediction result. In this way, the function of multi-task information exchange is implemented based on the training framework of the multi-task network, to flexibly adapt to the cases of misalignment of subtask annotation classes and incomplete data annotation, and training is performed by using the existing data fully, so that the multi-task network implements accurate recognition in a lack of data annotation, to better perceive an environment around the vehicle, and provide accurate guidance information for subsequent decision-making and execution of an autonomous driving system.

An embodiment of the present disclosure further provides a computer storage medium. The computer storage medium stores a computer program for exchanging electronic data. The computer program causes a computer to perform some or all of the steps of any method recorded in the foregoing method embodiments. The computer includes an electronic device.

An embodiment of the present disclosure further provides a computer program product. The computer program product includes a non-transitory computer-readable storage medium storing a computer program. The computer program is operable to causes a computer to perform some or all of the steps of any method recorded in the foregoing method embodiments. The computer program product may be a software installation package. The computer includes an electronic device.

It needs to be noted that, for ease of description, the method embodiments are described as a series of action combinations. However, a person skilled in the art should know that the present disclosure is not limited to the described order of actions, because some steps may be performed in another order or simultaneously according to the present disclosure. In addition, a person skilled in the art should also learn that, the embodiments described in this specification are all preferred embodiments, and actions and modules involved are not necessarily all required in the present disclosure.

In the foregoing embodiments, the descriptions of the embodiments have their respective focuses. For a part that is not described in detail in an embodiment, reference may be made to related descriptions in other embodiments.

In the embodiments provided in the present disclosure, it should be understood that the disclosed device may be implemented in another manner. For example, the described device embodiments are merely examples. For example, division of the units is merely logical function division, and there may be other division during actual implementation. For example, multiple units or components may be combined or integrated into another system, or some features may be ignored or not performed. In addition, the displayed or discussed mutual couplings or direct couplings or communication connections may be implemented by some interfaces; indirect couplings or communication connections between devices or units which may be electric or in other forms.

The units described as separate components may or may not be physically separated, and a component displayed as a unit may or may not be a physical unit, that is, may be located in one place, or may be distributed to multiple network units. Some or all of the units may be selected based on an actual requirement to achieve the objectives of the solutions of the embodiments.

In addition, the functional units in the embodiments of the present disclosure may be integrated into one processing unit, or each of the units may independently exist physically, or two or more units may be integrated into one unit. The integrated unit may be implemented in a form of hardware or in a form of a software functional unit.

When the integrated unit is implemented in the form of a software functional unit and sold or used as an independent product, the integrated unit may be stored in a computer-readable memory. Based on this understanding, the technical solutions of the present disclosure essentially, a part contributing to the related art, or all or a part of the technical solutions may be implemented in a form of a software product. The computer software product is stored in a memory, and includes several instructions to enable a computer electronic device (which may be a personal computer, an electronic device, or a network electronic device) to perform all or a part of the operations of the methods in the embodiments of the present disclosure. The foregoing memory includes: any medium that can store program code, such as a USB flash drive, a Read-Only Memory (ROM), a Random Access Memory (RAM), a magnetic disk, or an optical disc.

A person of ordinary skill in the art may understand that all or a part of the steps in the various methods in the foregoing embodiments may be completed by a program instructing related hardware. The program may be stored in a computer-readable memory. The memory may include a USB flash drive, a read-only memory (English: Read-Only Memory, ROM for short), a random access memory (English: Random Access Memory, RAM for short), a magnetic disk, an optical disc, or the like.

The embodiments of the present disclosure are described above in detail. Although the principles and implementations of the present disclosure are described by using specific examples in this specification, the descriptions of the foregoing embodiments are merely intended to help understand the method and the core idea of the method of the present disclosure. Meanwhile, a person of ordinary skill in the art may make modifications to the specific implementations and application range according to the idea of the present disclosure. In conclusion, the content of this specification is not construed as a limit on the present disclosure.

**Claims**

1. A method for training a multi-task network, the method comprising:

   obtaining a data training set, the data training set comprising a plurality of images;
   performing feature extraction on the plurality of images in the data training set, to obtain a first feature and a second feature, the first feature comprising a plurality of feature vectors corresponding to the plurality of images at different scales, and the second feature being a plurality of detection-related feature vectors obtained by performing feature extraction on the plurality of feature vectors that are at the different scales;
   determining a comprehensive feature based on the first feature and the second feature, the comprehensive feature being used for representing a feature obtained by fusing the plurality of feature vectors corresponding to the images at the different scales;
   determining a target-detection prediction result based on the second feature;
   determining a semantic-segmentation prediction result based on the comprehensive feature and the target-detection prediction result; and
   determining a multi-task loss function based on the target-detection prediction result and the semantic-segmentation prediction result, and optimizing training of the multi-task network based on the multi-task loss function.

2. The method according to claim 1, wherein obtaining the data training set comprises:

obtaining an initial image set, and determining an image-class distribution status through semantic-segmentation annotation and target-detection annotation for a first-class image in the initial image set, the image-class distribution status comprising classes and total quantities;

determining an image class with a largest total quantity based on the image-class distribution status;

duplicating an image of another image class based on a quantity ratio of a first total quantity corresponding to the image class with the largest total quantity to a second total quantity corresponding to the another image class, to cause the total quantity of the another image class to reach the first total quantity, wherein the duplicated image is a second-class image, and the first-class image and the second-class image form an extended image set; and

performing balanced sampling of different image classes on the extended image set, to obtain the data training set.

3. The method according to claim 1, wherein the plurality of feature vectors comprise a first feature vector and a second feature vector, the plurality of detection-related feature vectors comprise a first detection-related feature vector and a second detection-related feature vector, and determining the comprehensive feature based on the first feature and the second feature comprises:

mapping the first detection-related feature vector to a segmentation feature space, to generate a first interaction parameter and a second interaction parameter, the segmentation feature space being used for representing a set space including a plurality of segmentation-related feature vectors obtained by performing feature extraction on the plurality of feature vectors that are at the different scales;

performing feature fusion based on the first interaction parameter, the second interaction parameter, and the first feature vector, to obtain a first comprehensive feature;

fusing the first comprehensive feature and the second feature vector, to generate a new second feature vector;

mapping the second detection-related feature vector to the segmentation feature space, to generate a third interaction parameter and a fourth interaction parameter; and

performing feature fusion based on the third interaction parameter, the fourth interaction parameter, and the new second feature vector, to obtain a second comprehensive feature, and determining the second comprehensive feature as the comprehensive feature.

4. The method according to claim 3, wherein the plurality of feature vectors further comprise a third feature vector, the plurality of detection-related feature vectors further comprise a third detection-related feature vector, and after the second comprehensive feature is obtained, the method further comprises:

fusing the second comprehensive feature and the third feature vector, to generate a new third feature vector;

mapping the third detection-related feature vector to the segmentation feature space, to generate a fifth interaction parameter and a sixth interaction parameter; and

performing feature fusion based on the fifth interaction parameter, the sixth interaction parameter, and the new third feature vector, to obtain a third comprehensive feature, and determining the third comprehensive feature as the comprehensive feature.

5. The method according to claim 3, wherein performing feature fusion based on the first interaction parameter, the second interaction parameter, and the first feature vector, to obtain the first comprehensive feature comprises:

determining a new first feature vector based on a weight of the first interaction parameter and a weight of the first feature vector, the weight of the first interaction parameter and the weight of the first feature vector being respectively calculated based on different parts of the first interaction parameter and the first feature vector;

performing feature extraction on the new first feature vector, to obtain a fourth feature vector; and

determining a new fourth feature vector based on a weight of the second interaction parameter and a weight of the fourth feature vector, the weight of the second interaction parameter and the weight of the fourth feature vector being respectively calculated based on different parts of the second interaction parameter and the fourth feature vector, and the first comprehensive feature being determined based on the new fourth feature vector.

6. The method according to claim 1, wherein determining the semantic-segmentation prediction result based on the comprehensive feature and the target-detection prediction result comprises:

determining a first semantic-segmentation prediction result based on the comprehensive feature;

determining, from the target-detection prediction result, a second class that is the same as a first class in the first semantic-segmentation prediction result;

performing dimensional alignment on the second class based on the first class, to cause a quantity of the second class to be the same as a quantity of the first class, to obtain a new target-detection prediction result; and determining a second semantic-segmentation prediction result based on the new target-detection prediction result and the first semantic-segmentation prediction result, and determining the second semantic-segmentation prediction result as the semantic-segmentation prediction result.

7. The method according to claim 6, wherein the multi-task comprises a plurality of subtasks, the plurality of subtasks comprise target detection and semantic segmentation, and determining the multi-task loss function based on the target-detection prediction result and the semantic-segmentation prediction result comprises:

determining a target-detection loss value $L_1$ based on the target-detection prediction result, and determining a semantic-segmentation loss value $L_2$ based on the semantic-segmentation prediction result, a subtask loss value $L_i$ satisfying the following formula:

$$L_i = \begin{cases} 0, y_i \text{ is null} \\ f_{loss_i}(f^w(x), y_i), y_i \text{ is not null} \end{cases}$$

wherein $y_i$ is a subtask prediction result, $i$ = 1 or 2, $f^w(x)$ is a subtask prediction output probability, and $f_{loss_i}()$ is a loss-function calculation formula; and
determining the multi-task loss function based on the subtask loss value $L_i$.

8. The method according to claim 7, wherein determining the multi-task loss function based on the subtask loss value $L_i$ comprises:

respectively determining subtask weights $\delta_i$ based on uncertainty of the multi-task; and
determining the multi-task loss function $-log\ p(y_1, y_2|f^w(x))$ by using a negative log-likelihood loss function based on the subtask loss value $L_i$ and the subtask weights $\delta_i$, the multi-task loss function being calculated based on the following formula:

$$-log\ p(y_1, y_2|f^w(x)) = \frac{1}{\delta_1}L_1 + log\ \delta_1 + \frac{1}{\delta_2}L_2 + log\ \delta_2$$

wherein $p$ represents probability distribution.

9. The method according to claim 1, wherein the plurality of images are images related to a vehicle.

10. An electronic device, comprising a processor and a memory that stores executable instructions, the memory storing one or more programs, and when the processor executes the executable instructions stored in the memory, the processor performing the method according to any one of claims 1 to 9.

11. A computer-readable storage medium, storing a power data management program and comprising executable instructions, when a processor of an electronic device executes the executable instructions, the processor performing the method according to any one of claims 1 to 9.

Autonomous driving system

Environment sensing positioning
module 101

Training module 1011

Decision planning module 102

Control execution module 103

10

FIG. 1

Network training system

Data-class balancing module
201

Information exchange
module 202

Loss weight module 203

20

FIG. 2

Obtain a data training set, the data training set including multiple images ⟋S310

Perform feature extraction on the multiple images in the data training set, to obtain a first feature and a second feature, the first feature including multiple feature vectors corresponding to the multiple images at different scales, and the second feature being multiple detection-related feature vectors obtained by performing feature extraction on the multiple feature vectors that are at the different scales ⟋S320

Determine a comprehensive feature based on the first feature and the second feature, the comprehensive feature being used for representing a feature obtained by fusing the multiple feature vectors corresponding to the images at the different scales ⟋S330

Determine a target-detection prediction result based on the second feature ⟋S340

Determine a semantic-segmentation prediction result based on the comprehensive feature and the target-detection prediction result ⟋S350

Determine a multi-task loss function based on the target-detection prediction result and the semantic-segmentation prediction result, and optimize training of the multi-task network based on the multi-task loss function ⟋S360

# FIG. 3

Determine a class set in a data set — S410

Determine a detection quantity of each class based on the class set — S420

Count classes of all images in the data set and the detection quantities corresponding to the classes, to obtain a data-class distribution status — S430

Determine an image class with a largest total quantity based on the data-class distribution status, and expand the data set based on the image class with the largest total quantity — S440

Perform balanced sampling of different image classes on an expanded data set, to obtain a data training set — S450

## FIG. 4

X

A → Attention weighting

X'

Convolutional layer

F

B → Attention weighting

F'

Batch normalization layer

Activation function

Y

FIG. 5

Feature extraction module 601

Detection head module 602

Detection output module 604

Detection loss module 606

Segmentation head module 603

Segmentation output module 605

Segmentation loss module 607

FIG. 6

Device 70 for training a multi-task network

| First obtaining unit 71 | Second obtaining unit 72 | First determining unit 73 |
|---|---|---|

| Fourth determining unit 76 | Third determining unit 75 | Second determining unit 74 |
|---|---|---|

## FIG. 7

Device 70 for training a multi-task network

Communication module 701

Processing module 702

Storage module 703

## FIG. 8

Electronic device

Processor 910

Communication interface
930

900

Memory 920

One or more programs 921

FIG. 9

Europäisches
Patentamt

European
Patent Office

Office européen
des brevets

# EUROPEAN SEARCH REPORT

**Application Number**

EP 25 16 6172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YIHAN ET AL: "Cross-task feature enhancement strategy in multi-task learning for harvesting Sichuan pepper", COMPUTERS AND ELECTRONICS IN AGRICULTURE, vol. 207, 3 March 2023 (2023-03-03), page 107726, XP093284332, * abstract * * sections 1, 2 and 3 * * figures 4, 5 * | 1-11 | INV. G06V10/82 G06V10/26 G06V10/764 G06V10/80 G06V20/56 G06V20/70 |
| X | HUANG SUIZHI ET AL: "YOLO-Med : Multi-Task Interaction Network for Biomedical Images", ICASSP 2024 - 2024 IEEE INTERNATIONAL CONFERENCE ON ACOUSTICS, SPEECH AND SIGNAL PROCESSING (ICASSP), IEEE, 18 March 2024 (2024-03-18), pages 2175-2179, XP034653370, DOI: 10.1109/ICASSP48485.2024.10446165 Retrieved from the Internet: URL:https://ieeexplore.ieee.org/abstract/document/10446165> * abstract * * sections 2 and 3 * * figure 2 * | 1-11 | |
| A | US 2022/165045 A1 (JIANG LIHUI [CN] ET AL) 26 May 2022 (2022-05-26) * paragraphs [0185] - [0188], [0231], [0240], [0262] - [0266], [0299] - [0304] * | 1-11 | |

**TECHNICAL FIELDS SEARCHED (IPC)**

G06V

-/--

The present search report has been drawn up for all claims

| Place of search | Date of completion of the search | Examiner |
|---|---|---|
| The Hague | 6 June 2025 | Bouganis, Alexandros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

page 1 of 2

26

| | Europäisches Patentamt<br>European Patent Office<br>Office européen des brevets | | **EUROPEAN SEARCH REPORT** | | **Application Number**<br>EP 25 16 6172 |
|---|---|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | ZHANG YUNFENG ET AL: "Mask-R-FCN: A Deep Fusion Network for Semantic Segmentation", IEEE ACCESS, vol. 8, 29 July 2020 (2020-07-29), pages 155753-155765, XP093284611, * sections II and III.C * * figures 1, 3 * | 1-11 | |
| A | LOPES IVAN ET AL: "Cross-task Attention Mechanism for Dense Multi-task Learning", 2023 IEEE/CVF WINTER CONFERENCE ON APPLICATIONS OF COMPUTER VISION (WACV), IEEE, 2 January 2023 (2023-01-02), pages 2328-2337, XP034290803, DOI: 10.1109/WACV56688.2023.00236 * section 3 * * figure 2 * | 1-11 | |
| A | XU XIAOGANG ET AL: "MTFormer: Multi-task Learning via Transformer and Cross-Task Reasoning" In: "Computer Vision - ECCV 2022. ECCV 2022. Lecture Notes in Computer Science", 30 October 2022 (2022-10-30), SPRINGER, XP047638413, vol. 13687, pages 304-321, * section 3.4 * | 1-11 | **TECHNICAL FIELDS SEARCHED (IPC)** |

The present search report has been drawn up for all claims

| Place of search | Date of completion of the search | Examiner |
|---|---|---|
| The Hague | 6 June 2025 | Bouganis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 6172

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | Publication date | Patent family member(s) | Publication date |
|---|---|---|---|
| US 2022165045 A1 | 26-05-2022 | CN 110298262 A | 01-10-2019 |
| | | CN 118196828 A | 14-06-2024 |
| | | EP 3916628 A1 | 01-12-2021 |
| | | EP 4542444 A1 | 23-04-2025 |
| | | JP 7289918 B2 | 12-06-2023 |
| | | JP 2022515895 A | 22-02-2022 |
| | | US 2022165045 A1 | 26-05-2022 |
| | | WO 2020244653 A1 | 10-12-2020 |

EPO FORM P0459

For more details about this annex : see Official Journal of the European Patent Office, No. 12/82